**Europäisches Patentamt**

**European Patent Office**

**Office européen des brevets**

(19)

(11) Veröffentlichungsnummer: **0 199 836**
**A1**

(12) **EUROPÄISCHE PATENTANMELDUNG**

(21) Anmeldenummer: 85105274.6

(22) Anmeldetag: 30.04.85

(51) Int. Cl.⁴: **G 01 N 23/18**
**G 01 N 23/04**

(43) Veröffentlichungstag der Anmeldung:
**05.11.86 Patentblatt 86/45**

(84) Benannte Vertragsstaaten:
**AT BE CH DE FR GB IT LI LU NL SE**

(71) Anmelder: **KOHASZATI GYAREPITO VALLALAT**
**Révés u. 9.**
**H-1138 Budapest(HU)**

(71) Anmelder: **Gépipari Technologiai Intézet**
**Fogarasi ut 10-14**
**Budapest, XIV(HU)**

(72) Erfinder: **Bacskai, Endre, Dipl.-Ing.**
**Hunyadi J.u.11**
**Budapest I.(HU)**

(72) Erfinder: **Retfalvi, Ference, Dr. Dipl.-Ing.**
**Gvadanyi u. 44**
**Budapest XIV(HU)**

(72) Erfinder: **Sasdi, András, Dr. Dipl.-Ing.**
**Kertesz u. 10**
**Budapest (Budafok)(HU)**

(74) Vertreter: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) **Verfahren und Einrichtung zur Qualitätsprüfung von Schweissnähten mit Video-Radiographie.**

(57) Gemäß einem Verfahren und einer Vorrichtung zur Kontrolle der Qualität von Schweissnähten mit Video-Radiographie, in dessen Verlauf die Schweissnaht des zu prüfenden Gegenstands von Schritt zu Schritt mit Röntgenstrahlen oder Gammastrahlen durchgeleuchtet wird, sind auf der Längsachse (Z) der zu prüfenden Naht (V), mit der Vertikalachse (Y) symmetrisch, zwei nach unten gerichtete, die gleiche Fläche bestrahlende Strahlungsquellen (2,3) der gleichen Intensität angeordnet. Mit derselben Vertikalachse (Y) symmetrisch und mit der Längsachse (Z) und der Querachse (X) parallel ist das Signalfeld des Bildaufzeichners an der bestrahlten Fläche angeordnet, und zwar so, dass die Achsen der Strahlungsquelle und die Achse des Signalfelds in die gleiche Ebene fallen. Danach wird die Röntgenaufnahme in ein elektrisches Signal umgewandelt; die erste Aufnahme wird gespeichert. Demnach wird die zweite Strahlungsquelle impulsartig betätigt und die beiden gespeicherten Aufnahmen werden mit je einer mit demselben Verfahren früher verfertigten Referenzaufnahme – die eine fehlerlose Naht mit gleichem Signalfeld darstellt – verglichen. Wenn eine Identität besteht, wird der Nahtteil als einwandfrei qualifiziert, während bei einer Abweichung die Naht als fehlerhaft qualifiziert wird. An der ersten Aufnahme wird die Grösse der ersten Fehlerprojektierung (X') in Richtung der Querachse (X), an der zweiten Aufnahme die zweite Fehlerprojektion (X") bestimmt. Die Fehlerkoordinaten $(X_o, Y_o)$ werden nach der vorgegebenen Gleichung berechnet. Die errechneten Fehlerkoordinaten $(X_o, Y_o)$ werden registriert. Gleichzeitig wird die Laufnummer des Schrittes in Richtung der Längsachse (Z) als dritte Fehlerkoordinate $(Z_o)$ registriert. Danach wird die Messanordnung mit sich parallel in Richtung der Längsachse um eine Einheit weiter verschoben. Die einzelnen Verfahrensschritte werden in voller Länge der Naht wiederholt.

Fig.1

<u>Verfahren und Einrichtung zur Qualitätsprüfung von
Schweissnähten mit Video-Radiographie</u>

Die Erfindung betrifft ein Verfahren und eine das Verfahren realisierende Einrichtung, unter Zuhilfenahme deren die Qualität der Schweissnähte, die räumliche Anordnung und die räumlichen Abmessungen der Fehlerstellen mit Hilfe einer Röntgen-, oder Gammastrahlung und einer industriellen TV-Kette bestimmt und ausgewertet werden können.

Wie es wohlbekannt ist, wird die Qualität der Schweissnähte mit radiographischer Methode kontrolliert, undzwar derweise, dass die durchgeleuchtete Naht auf einen Film abgebildet und der entwickelte Film - der die Qualität der Naht dokumentiert - ausgewertet wird. Es sind weiterhin Mittel bekannt, mittels derer das Röntgenbild mit Hilfe einer industriellen TV-Kette angezeigt werden kann. Im allgemeinen aber wird diese Lösung nicht als Dokument angenommen, obzwar das Videobild magnetisch aufgezeichnet und nachträglich in beliebiger Anzahl reproduziert werden kann.

Keine der bekannten Verfahren sichert das richtige räumliche Bild der Fehler zu bestimmen; Es gibt aber solche Fälle, wo z.B. eine kugelförmige Einlagerung noch angenommen werden kann, eine scharfe Flacheinlagerung aber nicht. Das Röntgenbild für beide Fälle ist dasselbe, so daß beide Nähte zu verbessern sind.

Es ist auch nicht gleichgültig, zu welcher Nahtfläche der Fehler näher liegt, und aus welchem Ausgangspunkt das Abschnitzen zwecks Ausbesserung zu beginnen zweckmässig ist.

Also besteht zweifelsohne die Notwendigkeit, die räumliche Anordnung, die Abmessung und Form der Nahtfehlerstellen genau zu kennen. Zu diesem Zwecke sind die gegenwärtig bekannten Verfahren überhaupt nicht geeignet.

Unserer Erfindung wurde das Ziel gesetzt, ein Verfahren zu entwickeln und eine Einrichtung zu dessen Realisierung zu schaffen, unter Zuhilfenahme derer die räumliche Anordnung, die Form und Abmessungen der Nahtfehlerstellen bestimmt werden können, wobei das Verfahren eine dokumentierbare Qualitätskontrolle ermöglicht.

Demnach bezieht sich unsere Erfindung auf die Prüfung der Schweissnähte unter Anwendung der Videographie, im Laufe dessen die Schweissnaht des zu prüfenden Gegenstands von Stelle zu Stelle mit Röntgenstrahlen oder Gammastrahlen durchleuchtet wird und der Röntgenaufnahme der Naht und deren Umgebung entsprechende elektrische Signale erzeugt werden, wonach die Aufnahme gleichzeitig gespeichert und angezeigt wird; die Aufnahme wird ausgewertet und das Verfahren an der nächstfolgenden Stelle wiederholt. Das Wesentliche der Erfindung liegt darin, dass im Laufe der Prüfung auf der Längsachse der Naht senkrecht, mit der Vertikalachse symmetrisch zwei, mit gleicher Intensität schräg abwärts die gleiche Fläche bestrahlende Strahlungsquellen angeordnet sind. Mit derselben Vertikalachse symmetrisch, mit der Längsachse und der Querachse parallel wird das Signalfeld des Bildaufzeichners-auf die bestrahlte Fläche gerichtet - angeordnet, undzwar so, dass die Achsen der Strahlungsquellen und die Achse des Signalfelds in die gleiche Ebene fallen. Die erste Strahlungsquelle wird im Impulsbetrieb betätigt und die gewonnene Röntgenruheaufnahme in elektrische Signale umgewandelt, wonach diese erste Aufnahme gespeichert wird. Darauffolgend arbeitet die zweite Strahlungsquelle im Impulsbetrieb. In der nächsten Arbeitsphase werden die zwei gespeicherten Aufnahmen mit je einer unter Anwendung desselben Verfahrens aufgenommenen Referenzaufnahme, die über gleiche Signalfelder verfügende, tadellose Nähte darstellen, verglichen; bei festgestellter Identität wird der Nahtteil als fehlerlos und bei einer Abweichung als fehlerhaft qualifiziert. An der ersten Aufnahme werden die Grösse der ersten Fehlerprojektion der Querachse, an der zweiten Aufnahme die zweite Fehlerprojektion bestimmt, wonach die Fehlerkoordinaten nach der folgenden Formel berechnet werden:

$$X_o = L \frac{X' + X''}{X' - X'' + 2L}$$

$$Y_o = M + V - \frac{M + V + \Delta'}{X' + L} \quad /L + X_o/$$

wobei:

L die Halbdistanz der Strahlungsquelle

M die Höhe der Strahlungsquelle

V die Nahtdicke

$\Delta'$ den Spezialabstand

bezeichnen.

Die berechneten Fehlerkoordinaten werden aufgezeichnet gleichzeitig wird die Laufzahl des Schrittes in Richtung der longitudinalen Achse, als dritte Fehlerkoordinate registriert, wonach man das Messgerät um sich selbst parallel, um eine Einheit fortschreiten lässt, die Verfahrensschritte wiederholt und den Prozess in voller Länge der Naht ausführt.

Weiterhin betrifft unsere Erfindung eine Einrichtung zur Prüfung der Schweissnähte, bei dem über dem die zu prüfende Naht tragenden Gegestand eine Strahlungsquelle, unter demselben eine Bildaufnahmevorrichtung angeordnet sind und an den letzteren ein Anzeiger, eine Bildspeichereinheit und eine Recheneinheit angeschlossen sind. Das Wesentliche der Erfindung besteht darin, dass über dem Gegenstand eine zweite Strahlungsquelle angeordnet ist und die Achsen der ersten Bildaufnahmevorrichtung, der ersten Strahlungsquelle und der zweiten Strahlungsquelle in die gleiche Ebene fallen und an einen bewegenden Mechanismus angeschlossen sind; die Strahlunsquellen sind mit der Vertikalachse der Naht symmetrisch und schräg nach unten gerichtet angeordnet und zwar so, daß die folgenden Bedingungen erfüllt sind:

$$\frac{t}{2} = - /\Delta' + V/ \; \frac{2L + g}{2M} - \frac{g}{2}$$

$$\frac{K}{2} > \frac{G}{2} > \frac{g}{2}$$

$$Y_k > V \quad \Delta' > \Delta$$

wobei

$t$ den Durchmesser des Signalfeldes

$\Delta'$ den Abstand zwischen dem Target und der unteren Ebene der Naht

$V$ die Dicke der Naht

$L$ die Halbdistanz der Strahlungsquelle

$M$ die Höhe der Strahlungsquelle über der oberen Ebene der Naht

$g$ die Breite der Naht

$K$ den unteren Durchmesser des bestrahlten Raums

$G$ den oberen Durchmesser des bestrahlten Raums

$Y_k$ die Höhe der Kreuzungspunkte der Strahlkegel über der Naht

$\Delta$ die Höhe der Kreuzungspunkte der Strahlkegel vor der Naht

bezeichnen.

Die Strahlungsquellen arbeiten in einem Impulsbetrieb und sind an eine eine sich wechselnde Funktion gewährleistenden Strahlungsquellen-Steuereinheit angeschlossen. An dem bewegenden Mechanismus ist eine das Positionsignal erzeugende Quelle angeschlossen, deren Ausgang mit dem Bildspeicher, dem Anzeiger und einer Recheneinheit verbunden ist; die Einrichtung beinhaltet eine zentrale Steuereinheit, die die Funktion koordiniert und an deren Eingänge die Ausgänge der Recheneinheit und des Taktimpulsgenerators angeschlossen sind. Die Ausgänge der zentralen Steuereinheit schliessen sich den Seutereingängen der Recheneinheit, der Steuereinheit der Strahlungsquelle und des Betätigungsmechanismus an.

Die erfindungsgemässe Einrichtung kann zweckdienlich so ausgestaltet werden, indem die Recheneinheit einen Referenzbildspeicher, einen Bildkomparator, einen intermediären Bildspeicher, Spezialrechner, eine Einheit zur Dateneingabe und einen Fehlerspeicher enthält. Der Videosignaleingang der Recheneinheit ist mit den Signaleingängen des intermediären Bildspeichers verbunden, während der Ausgang des intermediären Bildspeichers einerseits an den einen Dateneingang des Spezialrechners, anderseits an den einen Signaleingang des mit dem Spezialrechner gesteuerten Fehlerspeichers angeschlossen ist. Der Positionsignaleingang der Recheneinheit schliesst sich an den anderen Dateneingang des Spezialrechners und an den anderen Signaleingang des Fehlerspeichers an, während der rückmeldende Ausgang des Spezialrechners mit den Signaleingängen der zentralen Steuereinheit verbunden ist. Die Steuereingänge der erwähnten Einheiten sind an die Steuerausgänge der zentralen Steuereinheit angeschlossen. Weiterhin ist der Basisdateneingang des Spezialrechners mit der Dateneingabeeinheit verbunden.

Die Erfindung wird anhand der beiliegenden Zeichnung näher erläutert. Es zeigen:

Figur 1 die geometrischen Verhältnisse der erfindungsgemässen Messanordnung,

Figur 2 den entlang der Naht liegenden Fehler und

Figur 3 das Blockschema des erfindungsgemässen Apparats.

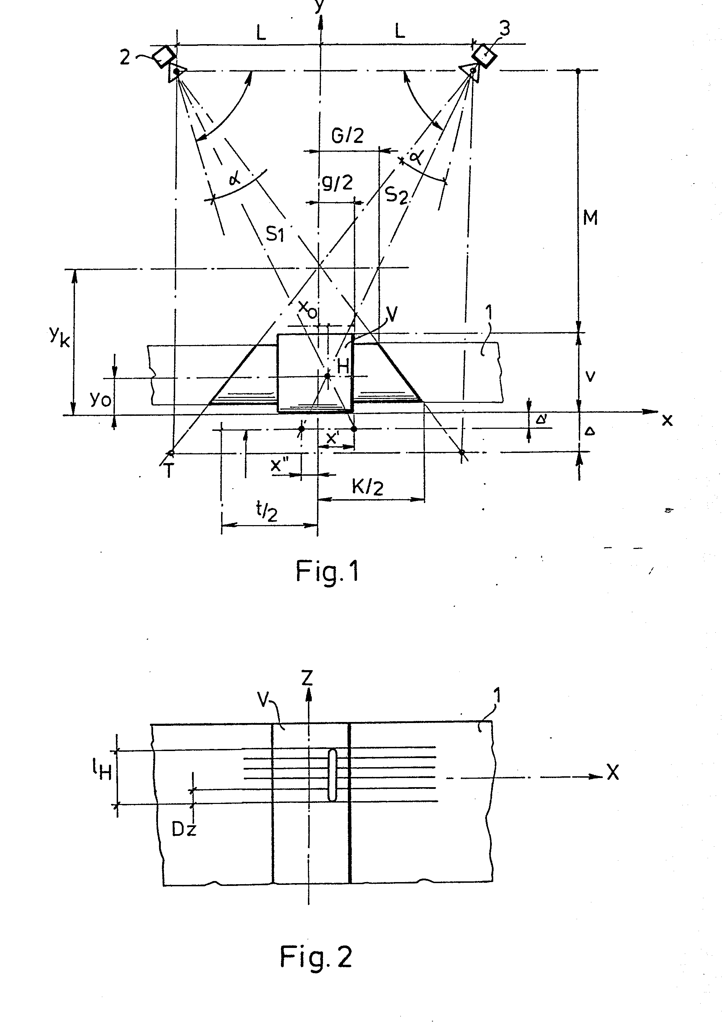

Wie es aus der Figur 1 wohl ersichtlich ist, sind über der Naht V des zu prüfenden Gegenstands, in der Höhe M, mit der Vertikalachse Y der Naht V symmetrisch, in einem Abstand von L-L zwei Strahlungsquellen abwärts gerichtet angeordnet.Die Strahlungsquellen 1 und 2 arbeiten im Impulsbetrieb und bestrahlen wechselnd unter einem Kegelwinkel $\alpha$ den Gegenstand 1. Die Querachse X verläuft parallel mit der Ebene der Naht V. Die Längsachse Z ist in der Länge angeordnet. Die Naht V weist die Dicke v und Breite g auf. Der von den Strahlungsquellen 2 und 3 bestrahlte Raumteil hat den oberen Durchmesser G und den unteren Durchmesser K und die Strahlkegel kreuzen sich in der Höhe $Y_k$. Der sich in der Naht V befindende Fehler H wird von den projizierenden Strahlen $S_1$ bzw. $S_2$ auf das Signalfeld mit dem Durchmesser t des Bildaufzeichners 4, der von der Achse in einem Abstand $\Delta'$ liegt, abgebildet. Die erste Aufnahme zeigt die erste Fehlerprojektion X', die zweite Aufnahme die zweite Fehlerprojektion X'', woraus mit Hilfe der untenangegebenen Gleichungen die Fehlerkoordinaten $X_o$ und $Y_o$ berechnet werden können.

$$X_o = L \frac{X' + X''}{X' - X'' + 2L}$$

$$Y_o = M + V - \frac{M + V + \Delta'}{X' + L} ( L + X_o).$$

Die Fehlerkoordinate $Z_o$ $\angle$in Richtung der Längsachse $Z\angle$ des Fehlers H wird so bestimmt, dass man die Strahlungsquellen 1 und 2, sowie die Bildaufnahmevorrichtung 4 mit sich selbst parallel, in Richtung der Längsachse Z um Schritte der Länge $D_Z$ fortschreiten lässt und in jeder Position je ein Aufnahmenpaar verfertigt wird. Die Summe der Einheitsschritte, so der Längen $D_Z$, mit der Anzahl der Schritte multipliziert, ergibt die Länge $l_H$ des Fehlers H, wobei die Fehlerkoordinate $Z_o = l_H$, wie es aus der Figur 2 ersichtlich ist.

Erfindungsgemäss wird bei der Kontrolle der zu prüfenden Naht V so verfahren, indem der Gegenstand 1 unter den Strahlungsquellen 1 und 2 und über dem Signalfeld T der Bildaufnahmevorrichtung 4 gesetzt wird, wonach man die Strahlungsquellen im Impulsbetrieb wechselnd arbeiten lässt, wonach die beiden Röntgenruheaufnahmen in elektrische Signale umgewandelt und gespeichert werden. In der nächsten Arbeitsphase werden die beiden gespeicherten Aufnahmen mit je einer Referenzaufnahme verglichen, die ebenfalls unter Anwendung des erfindungsgemässen Verfahrens von einer fehlerlosen Naht mit gleichem Signalfeld verfertigt worden sind. Wird nun die Identität festgestellt, so wird der Nahtteil als einwandfrei qualifiziert. Bei einer Abweichung ist die Naht als fehlerhaft betrachtet, wonach die Fehlerkoordinaten $X_o$ und $Y_o$ auf die geschliderte Weise bestimmt werden. Gleichzeitig wird die Laufnummer des Schritts in Richtung der Längsachse registriert. Nun folgt ein weiterer Schritt und Prozess und Qualifizierung werden wiederholt. Die Verfahrensschritte je um eine Einheit werden in voller Länge der Naht wiederholt.

In allen Fällen, in denen eine Fehlerstelle beobachtet wird, wird der fehlerhafte Nahtteil g z.B. mit einem Farbstoff markiert und mit einer Identifizierungszahl versehen, wodurch die Fehlerstellen genau identifiziert werden. In Kenntnis der Fehleraufnahmen und der Koordinaten kann der Fachingenieur eindeutig in Sachen der Reperatur und Art und Weise entscheiden.

Mit Hinsicht darauf, dass auf diese Weise das Vorhandensein eines Fehlers oder die Fehlerlosigkeit eindeutig dokumentiert sind, erübrigt sich die Verwendung des Röntgenfilms.

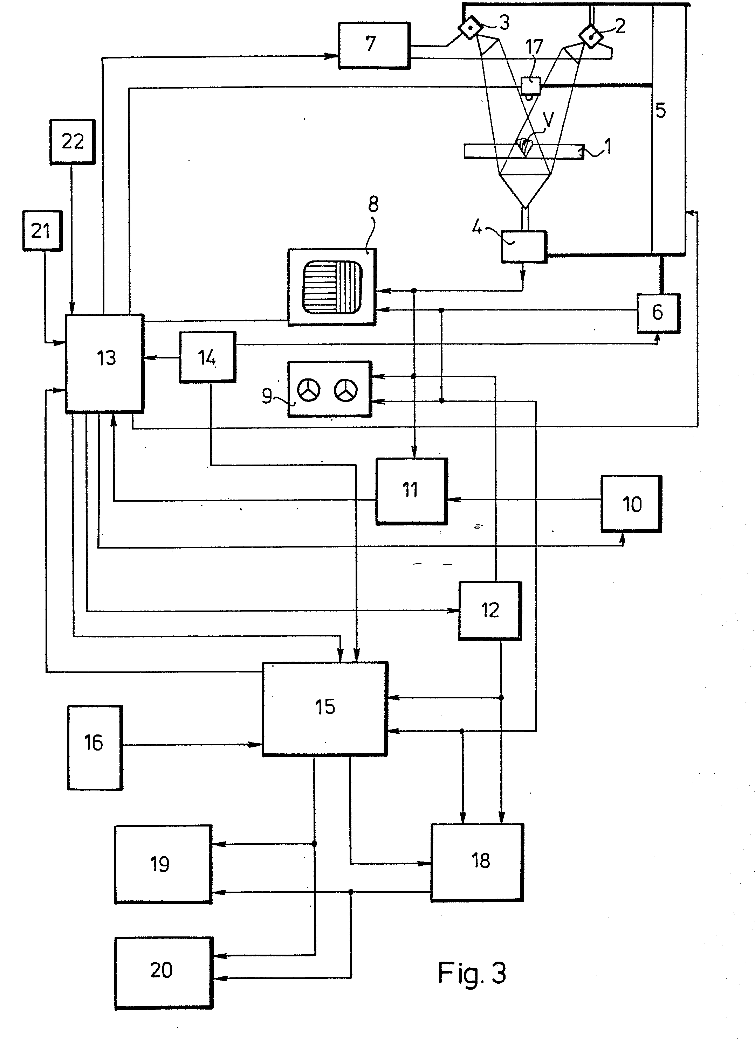

Das Blockschema der zur Realisierung des erfindungsgemässen Verfahrens dienenden Einrichtung ist in Figur 3 dargestellt.

Der zu prüfende Gegenstand 1 mit der Naht V liegt unter den Strahlungsquellen 1, 2 und über der Bildaufnahmevorrichtung 4. Die Achsen der Strahlungsquellen 2, 3 und die Achse der Bildaufnahmevorrichtung 4 fallen in dieselbe Ebene und sind an einem gemeinsamen Betätigungsmechanismus 5 befestigt. Die Strahlungsquellen 2, 3 sind mit der Vertikalachse Y der Naht V symmetrisch, in einem gegenseitigen Abstand von 2 L, nach unten gerichtet angeordnet. Für die einwandfreie Funktion ist es unerlässlich, dass die Strahlungsquellen 2, 3, die Naht V und die Bildaufnahmevorrichtung 4 den folgenden Beziehungen entsprechen:

$$\frac{t}{2} = - ( \Delta' + v) \frac{2 L + q}{2 M} - \frac{q}{2}$$

$$\frac{K}{2} > \frac{G}{2} > \frac{q}{2}, \quad Y_k > V \quad \text{und} \quad \Delta < \Delta'$$

wobei:

t den Durchmesser des Signalfeldes in der Bildaufnahmevorrichtung 4,

$\Delta$ den Abstand der Kreuzungspunkte der Strahlkegel unter der Naht V,

$\Delta'$ den Abstand des Signalfeldes von der unteren ebene der Naht V

L die Halbdistanz der Strahlungsquellen 2, 3

M die Höhe der Strahlungsquellen 2, 3 über
   der oberen Ebene der Naht V

g die Breite der Naht

$Y_k$ die Höhe des Kreuzungspunkts der Strahlkegel über der Naht

v die Dicke der Naht

K den unteren Durchmesser des bestrahlten Raums

G den oberen Durchmesser des bestrahlten Raums bezeichnen.

Die sich wechselnd Impulsbetriebfunktion der Strahlungsquellen 2, 3 wird durch die die Strahlungsquellen steuernde Einheit 7 gewährleistet. Dem Betätigungsmechanismus
wird die Aufgabe zugeteilt den gemeinsamen Fortschritt der
Strahlungsquellen 2, 3, der Bildaufnahmevorrichtung 4,
sowie des Fehlerstellenmarkers 17 mit sich selbst parallel,
in der Länge der Naht V sicherzustellen. Dem Betätigungsmechanismus 5 ist die das Positionsignal erzeugende Einheit 6 angeschlossen, die die Markersignale für den Bildanzeiger 8, den Bildspeicher, den Fehlerspeicher 18 und
den Spezialrechner 15 liefert. Der Ausgang der Bildaufnahmevorrichtung 4 ist den Eingängen des Bildanzeigers 8, des
Bildspeichers 9, des Bildkomparators 11 und des intermediären Bildspeichers 12 angeschlossen. Das im voraus aufgenommene Referenzbild ist in dem Referenzbildspeicher 10
enthalten, dessen Ausgang sich dem anderen Eingang des
Bildkomparators 11 anschliesst, während dessen Ausgang dem
einen Eingang der zentralen Steuereinheit 13 angeschlossen
ist. Der Ausgang des intermediären Bildspeichers 12 ist
einerseits mit dem Dateneingang des Spezialrechners 15, anderseits mit dem anderen Signaleingang des Fehlerspeichers
18 verbunden. Der Ausgang des Fehlerspeichers 18 ist an den
Fehleranzeiger 19 und an das Druckwerk 20 angeschlossen.

0199836

An einen weiteren Dateneingang des die Fehlerkoordinate bestimmenden Spezialrechners 15 ist die Dateneingabeeinheit 16 angeschlossen, mit der die sich auf die zu kontrollierende Naht V beziehenden Daten eingegeben werden können. Die Daten des Spezialrechners 15 erscheinen an dem Fehleranzeiger 19 und dem Druckwerk 20. Des weiteren steuern sie die Funktion des Fehlerspeichers 18 und liefern die zur abgestimmten Betätigung der gesamten Einrichtung erforderlichen Signale für die zentrale Steuereinheit 13. An die Signaleingänge der zentralen Steuereinheit 13 sind der Zeitimpulsgenerator - der die Taktimpulse des Spezialrechners 15 liefert, der Bildkomparator 11, die manuelle Schiebeeinheit 21 und der Umschalter 22 für manuelle und automatische Betätigung angeschlossen.

Gleichzeitig steuert und koordiniert die zentrale Steuereinheit 13 die Wirkungsweise der die Strahlungsquellen steuernden Einheit 7, des Betätigungsmechanismus 5, des Bildanzeigers 8, des Referenzbildspeichers 10, des intermediären Bildspeichers, des Spezialrechners 15, und des Fehlerstellemarkers 17.

Unter Anwendung der erfindungsgemässen Einrichtung wird die an dem Gegenstand 1 vorhandene Naht V folgenderweise geprüft:
Der Gegenstand 1 wird in der entsprechenden Position in die Maschine eingelegt, wonach die Einrichtung in Gang gesetzt wird. Die zentrale Steuereinheit 13 gibt Signale für die die Strahlungsquellen steuernden Einheit 7 ab, worauf diese die Strahlungsquellen 2, 3 im Impulsbetrieb, eine nach der anderen betätigt. Die Röntgenaufnahmen werden von der Bildaufnahmevorrichtung 4 wahrgenommen. Das an dessen Ausgang erscheinende Videosignal ist nun an dem Bildanzeiger ersichtlich. Es wird in dem Bildspeicher 9 registriert. Auch das Markersignal der das Positionsignal erzeugenden Einheit 6 wird hier gespeichert. Die Aufnahme wird in dem Bildkomparator 11 mit der Aufnahme der in dem Referenzbildspeicher 10 - die eine einwandfreie Naht darstellt - verglichen. Eine Identität wird der zentralen Steuereinheit 13 gemeldet, die diese Tatsache über den Spezialrechner 15 mit Hilfe des Druckwerks 20 mit dem Positionsignal und dem aus dem Markersignal gebildeten Signal zusammen dokumentiert und die Einrichtung in eine weitere Meßstelle verschiebt. So gelangen mit Hilfe des Betätigungsmechanismus 5 die Strahlungsquellen 2 und 3, der Fehlerstellemarker 17 und die Bildaufnahmevorrichtung 4 in eine weitere Arbeitsstellung.

Sollte nun der Bildkomparator 11 einen Fehler wahrnehmen, so wird dieser der zentralen Steuereinheit 13 gemeldet, die das Programm des Spezialrechners 15 zur Bestimmung der Koordinaten $X_o$, $Y_o$ und der Fehlerkoordinate $Z_o$ in Gang setzt.

Der Spezialrechner 15 erhält die sich auf den Fehler beziehenden Daten von dem intermediären Bildspeicher 12. Die berechneten Fehlerkoordinaten $X_o$, $Y_o$ und $Z_o$ werden mit dem Positionsignal und dem Identifizierungssignal mit Hil-fe des Druckers 20 ausgedruckt und mit der Nahtaufnahme zusammen an dem Fehleranzeiger 19 angezeigt.

Dem Fehlerspeicher 18 wird die Aufgabe zugeteilt, alle einen Fehler betreffenden Daten und Aufnahmen zu speichern.

Nachdem die Auswertung eines Fehlerpunkts beendet worden ist, gibt der Spezialrechner 15 ein Signal an die zentrale Steuereinheit 13 ab, die das Markieren des Fehlers mit Hilfe des Fehlerstellenmarkers 17 (z.B. mit einer Farbstoffpistole) in Gang setzt und in eine weitere Messstellung mit Hilfe des Betätigungsmechanismus 5 den Apparat verschiebt.

Auf diese Weise kontrolliert der erfindungsgemässe Apparat die Naht von Schritt zu Schritt.

Der Bildspeicher 9 sichert die Dokumentation der ganzen Prüfung undzwar in einer woimmer reproduzierbaren Weise, wobei die Berechnungen wiederholt durchgeführt werden können.

Aus den Gesagten geht es eindeutig hervor, dass unsere Erfindung mit der traditionellen Methode verglichen die folgenden Vorteile aufweist:
- alle mit den Filmen zusammenhängenden Arbeitsgänge erübrigen sich, wodurch das Verfahren schneller und billiger wird;
- auch die auf den Filmen nicht sichtbaren Informationen über die Fehlerstellen stehen zur Verfügung, wodurch Ausbesserung vereinfacht und beschleunigt wird; in gewissen Fällen kann sie sogar weggelassen werden;
- der Abstand zwischen der Fehlerstelle und der Nahtoberfläche kann unmittelbar bestimmt werden;
- die Prüfungsergebnisse können mit einem äusserst einfachen Verfahren dokumentiert werden  die Dokumentation wird einfach und mit geringem Kostaufwand reproduziert;
- im Hinblick darauf, dass Expositionszeit, Einlegen und Rausnahme des Films, Austausch und Entwicklung sich erübrigen, wird die Prüfung weitgehend beschleunigt;
- durch die Anwendung der Referenzmethode und eines Mikroprozessors wird die Auswertung vollkommen automatisiert.

Patentansprüche:

1. Verfahren zur Kontrolle der Qualität von Schweissnähten mit Videoradiographie, im Laufe dessen die Schweissnaht des zu prüfenden Gegenstands von Schritt zu Schritt mit Röntgenstrahlen oder Gammastrahlen durchgeleutet wird, wonach der Röntgenaufnahme der Naht und ihrer Umgebung entsprechende elektrische Signale erzeugt werden, das Bild gleichzeitig gespeichert angezeigt und ausgewertet wird, darauffolgend der Prozess an der nächstliegenden Stelle wiederholt wird, dadurch gekennzeichnet , dass auf der Längsachse (Z) der zu prüfenden Naht (V), mit der Vertikalachse (Y) symmetrisch, zwei nach unten gerichtete, die gleiche Fläche bestrahlende Strahlungsquellen (2,3) der gleichen Intensität angeordnet werden, und mit derselben Vertikalachse (Y) symmetrisch und mit der Längsachse (Z) und der Querachse (X) parallel das Signalfeld des Bildaufzeichners an der bestrahlten Fläche angeordnet wird, undzwar so, dass die Achsen der Strahlungsquelle und die Achse des Signalfelds in die gleiche Ebene fallen, wonach die Röntgenruheaufnahme in elektrisches Signal umgewandelt wird, die erste Aufnahme gespeichert wird, demnach die zweite Strahlungsquelle impulsartig betätigt wird und die beiden gespeicherten Aufnahmen mit je einer mit demselben Verfahren früher verfertigten Referenzaufnahme - die eine fehlerlose Naht mit gleichem Signalfeld darstellt - verglichen werden; wenn eine Identität besteht, der Nahtteil als einwandfrei qualifiziert wird, während bei einer Abweichung die Naht als fehlerhaft qualifiziert wird; an der ersten Aufnahme die Grösse der ersten Fehlerprojektierung ($X'$) in Richtung der Querachse ($X$), an der zweiten Aufnahme die zweite Fehlerprojektion ($X''$) bestimmt wird und die Fehlerkoordinaten nach der folgenden Gleichung berechnet werden:

$$X_0 = L \frac{X' + X''}{X' - X'' + 2L}$$

$$Y_0 = M + V - \frac{M + V + \Delta'}{X' + L} (L + X_0)$$

wobei

L die Halbdistanz der Strahlungsquelle

M die Höhe der Strahlungsquelle

V die Nahtdicke

$\Delta'$ den Abstand zwischen dem Signalfeld und der unteren Ebene der Naht

bezeichnen; die errechneten Fehlerkoordinaten ($X_0$, $Y_0$) registriert werden, gleichzeitig die Laufnummer des Schrittes in Richtung der Längsachse ($Z$) als dritte Fehlerkoordinate ($Z_0$) registriert wird, wonach die Messanordnung mit sich parallel in Richtung der Längsachse um eine Einheit weiter verschoben wird und die einzelnen Verfahrensschritte in voller Länge der Naht wiederholt werden.

2 Verfahren nach Anspruch 1, d a d r u c h   g e k e n n -
z e i c h n e t ,   dass der fehlerhafte Nahtteil an dem
Gegenstand 1 markiert und mit einer Identifizierungszahl
versehen wird, die mit den dazugehörenden Fehlerkoordinaten
$X_o$, $Y_o$, $Z_o$ zusammen registriert wird.

3. Einrichtung zur Prüfung von Schweissnähten, bei der
über dem die zu prüfende Naht tragenden Gegestand eine Strahlungsquelle und darunter eine Bildaufnahmevorrichtung angeordnet sind und an den letzteren ein Bildanzeiger, Bildspeicher,
und Rechner angeschlossen sind, d a d u r c h   g e k e n n -
z e i c h n e t ,   dass über dem Gegenstand (1) sich eine
zweite Strahlungsquelle (3) befindet, daß die Achsen der ersten
Strahlungsquelle (2), der zweiten Strahlungsquelle (3) und
der Bildaufnahmevorrichtung (4) in die gleiche Ebene fallen,
daß desweiteren ein Betätigungsmechanismus (5) vorgesehen
ist, daß Strahlungsquellen (2,3) mit der Vertikalachse
(Y) der Naht (V) symmetrisch und nach unten gerichtet so
angeordnet sind, dass die Anordnung den folgenden Bedingungen erfüllt:

$$\frac{t}{2} = -(\Delta' + V)\frac{2L + g}{2M} - \frac{g}{2}$$

$$\frac{K}{2} > \frac{G}{2} > \frac{g}{2}$$

$$Y_k > V, \quad \Delta < \Delta'$$

wobei

$\Delta$ den Abstand der Kreuzungspunkte der Strahlkegel unter der Naht,

t den Durchmesser des Signalfelds

$\Delta'$ den Abstand des Signalfelds von der unteren
Ebene der Naht

V die Nahtdicke

L  die Halbdistanz der Strahlungsquellen

M  die Höhe der Strahlungsquellen über der oberen
Ebene der Naht

g  die Nahtbreite

$Y_k$  die Höhe der Kreuzungspunkte der Strahlkegel
bezeichnen, daß desweiteren die Strahlungsquellen (2,3) im Impulsbetrieb arbeiten und sich an eine eine alternierende Funktion sichernde, die Strahlungsquellen steuernde Einheit anschliessen, dass dem Betätigungsmechanismus (5) die das Positionssignal abgebende Einheit (6) angeschlossen ist, deren Ausgang an den Bildspeicher (9), den Bildanzeiger (8) und den Rechner angeschlossen ist; daß desweiteren die Anordnung eine, die Funktionen abstimmende zentrale Steuereinheit (13) aufweist, an deren Eingänge die Ausgänge des Rechners, und ein Zeitimpulsgenerator (14) angeschlossen sind, während die Ausgänge der zentralen Steuereinheit (13) mit den Steuereingängen des Rechners, der die Strahlungsquellen steuernden Einheit (7) und des Betätigungsmechanismus (5) verbunden sind.

4. Einrichtung nach Anspruch 3, d a d u r c h  g e - k e n n z e i c h n e t , dass die Recheneinheit einen Referenzbildspeicher (10), einen Bildkomparator (11), einen intermediären Bildspeicher (12), Spezialrechner (15), eine Dateneingabeeinheit und einen Fehlerspeicher (18) enthält, und der Videosignaleingang der Recheneinheit an die Signaleingänge des Bildkomparators (11) und des intermediären Speichers (12) angeschlossen ist, daß der Ausgang des intermediären Bildspeichers (12) einerseits mit dem einen Dateneingang des Spezialrechners (15), anderseits mit dem einem Signaleingang des Fehlerspeichers (18) - der mit dem Spezialrechner (15) gesteuert ist - verbunden ist, daß desweiteren der Positionsignaleingang der Recheneinheit sich dem anderen Dateneingang des Spezialrechners (15) und dem anderen Signaleingang des Fehlerspeichers (18) anschliesst, während der Ausgang des Bildkomparators (11), der rückmeldende Ausgang des Spezialrechners (15) an die Signaleingänge

0199836

der zentralen Steuereinheit (13) angeschlossen sind und daß die Steuereingänge der erwähnten Einheiten an die Steuerausgänge der zentralen Steuereinheit (13) angeschlossen sind und desweiteren die Dateneingabeeinheit (16) mit dem die Basisdaten eingebenden Eingang des Spezialrechners (15) verbunden ist.

5. Einrichtung nach Anspruch 4, d a d u r c h  g e - k e n n z e i c h n e t , dass an den Spezialrechner (15) und dem Fehlerspeicher ein Fehleranzeiger (19) und ein Druckwerk (20) angeschlossen sind.

6. Einrichtung nach jedwelchem der Ansprüche 3 bis 5, d a d r u c h  g e k e n n z e i c h n e t , dass über dem Gegenstand (1), ein an die zentrale Steuereinheit (13) angeschlossener Fehlerstellenmarker (17) vorgesehen ist.

7. Einrichtung nach jedwelchem der Ansprüche 3 bis 6, d a d u r c h  g e k e n n z e i c h n e t , dass an die zentrale Steuereinheit (13) ein Umschalter (22) für die manuelle bzw. automatisierte Betriebsweise und eine handbetätigte Schiebeeinheit (21) angeschlossen ist.

0199836

Fig.1

Fig.2

- 2/2 -

0199836

Fig. 3

Europäisches
Patentamt

**EUROPÄISCHER RECHERCHENBERICHT**

Nummer der Anmeldung

EP 85 10 5274

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 370 975 (B.V. NERATOOM) * Seite 6, Zeilen 25-35; Seite 7, Zeilen 1-7 * | 1 | G 01 N 23/18 G 01 N 23/04 |
| | --- | | |
| A | PHYSICS OF INDUSTRIAL RADIOLOGY; 1976, Seiten 359-373, American Elsevier Publishing Company Inc.; R. HALMSHAW et al.: "Applications of radiological inspection" * Seiten 366-368 * | 1 | |
| | --- | | |
| A | SOVIET JOURNAL OF NONDESTRUCTIVE TESTING, Band 20, Nr. 5, Mai 1984, Seiten 304-307,, New York, US; A.V. MATRENKO et al.: "Automating metal structure monitoring by the use of X-ray TV display" * Seiten 305 und 306 * | 4-7 | |

RECHERCHIERTE SACHGEBIETE (Int. Cl.4)

| Kategorie | | | |
|---|---|---|---|
| | --- | | |
| A | WELDING JOURNAL, Band 61, Nr. 2, Februar 1982, Seiten 32-35, Miami, Florida, US; P.D. WATSON: "Design for welding examination" * Seite 34 * | 1 | G 01 N 23/00 G 01 N 29/00 |
| | ----- | | |

Der vorliegende Recherchenbericht wurde für alle Patentansprüche erstellt.

| Recherchenort DEN HAAG | Abschlußdatum der Recherche 19-12-1985 | Prüfer DIETRICH A. |
|---|---|---|